# EUROPÄISCHE PATENTSCHRIFT

(11) **EP 3 828 426 B1**
(45) Veröffentlichungstag und Bekanntmachung des Hinweises auf die Patenterteilung: **09.08.2023**
(21) Anmeldenummer: 20208643.5
(22) Anmeldetag: 19.11.2020
(51) Int. Cl.: F16B 12/50, F16B 12/32, F16B 7/04, F16B 7/18, F16B 12/00, F16B 35/00

(54) **VERBINDUNGSELEMENT FÜR MEHRKANTROHRE**
CONNECTION ELEMENT FOR MULTI-EDGE PIPES
ÉLÉMENT DE FIXATION POUR TUBES À PLUSIEURS BORDURES

(30) Priorität: 28.11.2019 DE 202019106638 U
(43) Veröffentlichungstag der Anmeldung: 02.06.2021
(73) Patentinhaber: Serafini Besitz GmbH & Co. KG, 58636 Iserlohn (DE)
(72) Erfinder: PIELSTICKER, Roland, 58638 Iserlohn (DE)
(74) Vertreter: Meinke, Jochen

(56) Entgegenhaltungen:
- EP-A1- 0 442 826
- DE-A1-102011 100 888
- DE-U- 7 303 450

## Beschreibung

Die Erfindung betrifft ein Verbindungssystem mit den Merkmalen des Patentanspruchs 1.

Solche Verbindungssysteme mit Verbindungselementen sind bekannt. Die Verbindungselemente weisen in der Regel eine Außenkontur auf, die der Innenkontur des aufzusteckenden Rohrendes entspricht. Im Rohrende ist eine Querbohrung mit Innengewinde vorgesehen, durch die eine Klemmschraube eingeschraubt wird und klemmend am zapfenförmigen Ansatz des Verbindungselementes anliegt. Die durch eine solche Verbindung aufzubringende Klemmkraft ist allerdings begrenzt. Derartige Verbindungselemente werden z.B. im Ladenbau oder zur Bildung von Rahmen für Möbel verwendet.

Zur Erhöhung der Klemmkraft ist aus DE 21 59 971 A1 ein Eckverbinder für Vierkantrohre mit in die Rohrenden einzusteckenden, an zumindest zwei gegenüberliegenden Rohrwandungen flächig anliegenden Zapfen bekannt, bei welchem an den Zapfen eine stirnseitige Keilnut und ein darin verschiebliches Spreizstück vorgesehen sind, das auf einer durch einen Eckverbinderkopf geführte, von au-βen zugänglichen Schraubspindel sitzt. Mit einem solchen Eckverbinder lassen sich zwar größere Klemmkräfte erreichen, dies wird aber durch einen aufwendigen Aufbau erreicht.

Aus DE 10 2011 100 888 A1 ist ein Verbindungssystem mit den Merkmalen des Oberbegriffs des Patentanspruchs 1 bekannt. Dieses Verbindungssystem weist ein Verbindungselement mit zapfenförmigen Ansätzen auf, auf welche Rundrohre aufgesteckt werden können. Diese Ansätze können Abflachungen aufweisen. Jeder Ansatz weist eine durchgehende Querbohrung mit Innengewinde auf, welche in Montagelage mit einer Bohrung des Rohres fluchtet. Dabei nimmt die Querbohrung einen Gewindestift auf, der in Montagelage bis an die Innenseite des Rohrendes herausgeschraubt wird und gegen die Innenseite des Rohres drückt und dadurch dieses rotatorisch und axial sichert. Die Klemmwirkung ist jedoch begrenzt, da die Kontaktfläche zwischen der Spitze des Gewindestiftes und dem Rohr klein ist. Aus EP 0 442 826 A1 und DE 73 03 450 U sind weitere Verbindungssysteme bekannt.

Aufgabe der Erfindung ist es, ein Verbindungssystem mit einfachem Aufbau zu schaffen, welches eine Klemmverbindung mit hoher Klemmkraft zur Verfügung stellt.

Diese Aufgabe wird bei einem Verbindungssystem der eingangs bezeichneten Art erfindungsgemäß dadurch gelöst, dass das Rohr ein Mehrkantrohr ist und dass die Längsachse der Querbohrung in Montagelage mit einer Ecke des Rohrendes fluchtet und der Gewindestift in Montagelage bis in die Ecke des Rohrendes herausschraubbar ist und mit seiner Spitze in der Ecke anliegt, wodurch Außenflächen des Ansatzes flächig gegen Innenflächen des Rohrendes angedrückt werden.

Es wird somit ein Verbindungssystem zur Verfügung gestellt, bei welchem in Montagelage das Verbindungselement bereichsweise mit seinen Außenflächen an den Innenflächen des zugeordneten Rohrendes flächig anliegt. Dazu wird das betreffende Rohrende auf einen zapfenförmigen Ansatz des Verbindungselementes aufgesteckt und anschließend wird mit einem Schraubwerkzeug, das durch eine Bohrung im Rohrende hindurchgeführt wird, der Gewindestift innerhalb des zapfenförmigen Ansatzes bis zur Anlage in der Ecke des Rohrendes herausgeschraubt, wodurch die Außenflächen des zapfenförmigen Ansatzes gegen die Innenflächen des Rohrendes angedrückt werden. Dadurch steht eine große Klemmkraft zur Verfügung. Außerdem ist der Gewindestift von außen nicht sichtbar und beeinträchtigt das optische Erscheinungsbild des Verbindungselementes bzw. Rohrendes nicht. Ferner kann der Gewindestift vormontiert werden, d.h. so in den zapfenförmigen Einsatz eingeschraubt werden, dass er nicht aus diesem herausragt. Dies vereinfacht die Montage. Da der Gewindestift mit seiner Spitze in einer Ecke des Mehrkantrohres anliegt, in welcher das Mehrkantrohr besonders stabil ist, besteht keine Gefahr einer Verformung des Mehrkantrohres. Wenn ein Gewindestift mit einer Spitze verwendet wird, deren Winkel dem Eckwinkel des Mehrkantrohres entspricht, liegt die Spitze des Gewindestiftes sogar flächig in der Ecke an, was besonders vorteilhaft ist.

In bevorzugter Ausgestaltung ist vorgesehen, dass wenigstens zwei zapfenförmige Ansätze vorgesehen sind, die an einem gemeinsamen Zentralkörper angeordnet sind. Das Verbindungselement eignet sich bei dieser Ausgestaltung dazu, mehrere Mehrkantrohre miteinander zu verbinden, und zwar je nach Anordnung der zapfenförmigen Ansätze in beliebigen Winkellagen zueinander.

Dabei ist bevorzugt vorgesehen, dass der Zentralkörper Anschlagflächen für das jeweilige Rohrende aufweist. Das jeweilige Rohrende kann dann bis zur Anlage an den Anschlagflächen aufgesteckt werden, so dass die entsprechende Querbohrung im Rohrende zwangsweise korrekt zur Querbohrung im zugeordneten zapfenförmigen Ansatz ausgerichtet ist.

Um eine besonders gute Klemmwirkung zu erreichen, ist weiterhin vorgesehen, dass der wenigstens eine zapfenförmige Ansatz zwei in Montagelage unter Druck an zwei Innenflächen des jeweiligen Rohrendes anliegende Außenflächen aufweist. Diese Ausgestaltung ist insbesondere bei Vierkantrohren vorgesehen.

In weiterer Ausgestaltung ist vorgesehen, dass der wenigstens eine zapfenförmige Ansatz zwei benachbarte durchgehende Querbohrungen mit Innengewinde aufweist, die in Montagelage mit einer Ecke des Rohrendes fluchten und die jeweils einen in Montagelage bis in die Ecke des Rohrendes herausschraubbaren Gewindestift aufnehmen. Durch diese Ausgestaltung ist das jeweilige Rohrende zweifach am zapfenförmigen Ansatz gesichert, was die Klemmwirkung erhöht und außerdem sicherstellt, dass das jeweilige Mehrkantrohr exakt parallel zum zapfenförmigen Ansatz ausgerichtet ist.

Bevorzugt ist das Verbindungselement als Druckgussteil ausgebildet, vorzugsweise aus Zink.

Die mit dem Verbindungselement zu verbindenden Mehrkantrohre müssen lediglich mit einer oder zwei Querbohrungen am jeweiligen Rohrende versehen werden. Ein Innengewinde in den Rohrenden ist nicht erforderlich. Die Bohrungen dienen ausschließlich dazu, ein Betätigungswerkzeug für die jeweiligen Gewindestifte im zapfenförmigen Ansatz des Verbindungselementes einführen zu können.

Die Erfindung ist nachstehend anhand der Zeichnung beispielhaft näher erläutert. Diese zeigt in
- Fig. 1: in perspektivischer Darstellung ein Verbindungselement nach einer ersten Ausgestaltung,
- Fig. 2: ebenfalls in perspektivischer Darstellung ein Verbindungselement nach einer zweiten Ausgestaltung,
- Fig. 3: das Verbindungselement nach Fig. 1 von unten mit aufgestecktem, aber noch nicht befestigten Rohrende,
- Fig. 4: ein vergrößertes Detail IV in Fig. 3,
- Fig. 5: eine Ansicht V in Fig. 4,
- Fig. 6: eine Ansicht von unten auf das Verbindungselement nach Fig. 3 nach der Montage,
- Fig. 7: ein vergrößertes Detail VI in Fig. 6 und
- Fig. 8: eine Ansicht VII in Fig. 7.

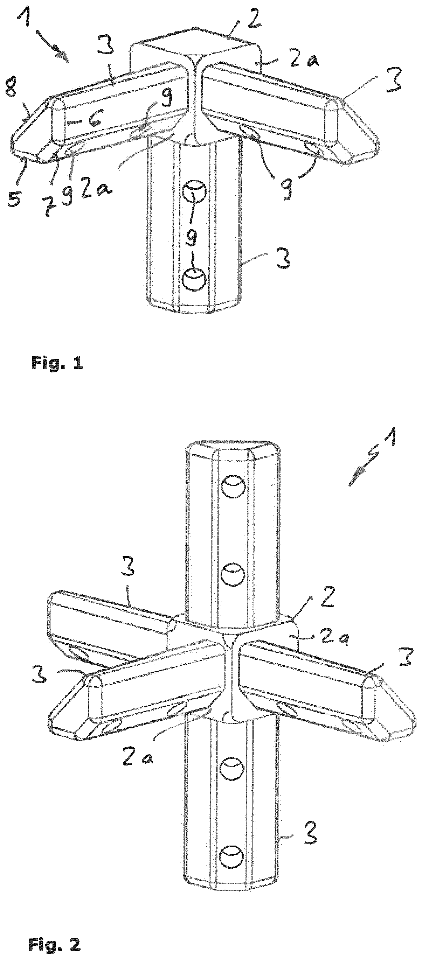

Ein Verbindungselement für Mehrkantrohre ist in Fig. 1 allgemein mit 1 bezeichnet. Dieses Verbindungselement 1 weist beim Ausführungsbeispiel nach Fig. 1 einen würfelförmigen Zentralkörper 2 auf, an den drei zapfenförmige Ansätze 3 einstückig angeformt sind, welche bei diesem Ausführungsbeispiel jeweils rechtwinklig zueinander in drei Ebenen angeordnet sind. Das Verbindungselement 1 ist dabei bevorzugt aus Zink-Druckguss hergestellt.

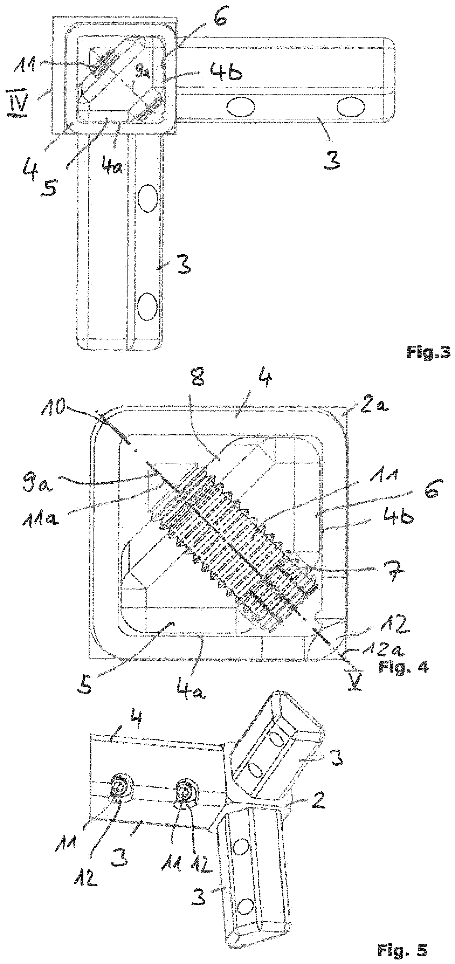

Dieses Verbindungselement 1 dient bei den Ausführungsbeispielen zur Verbindung von quadratischen Vierkantrohren, ein solches Vierkantrohr ist in den Fig. 3, 4 und 6, 7 mit 4 bezeichnet. Angepasst an dieses quadratische Vierkantrohr 4 weist jeder zapfenförmige Ansatz 3 zwei rechtwinklig zueinander angeordnete Außenflächen 5, 6 auf, welche jeweils über eine im 45°-Winkel dazu angeordnete Außenfläche 7 und 8 miteinander verbunden sind, wobei die Außenfläche 7 schmaler als die Außenfläche 8 ist.

Wie am besten aus den Fig. 3, 4 und 6, 7 hervorgeht, liegen die beiden Außenflächen 5, 6 in Montagelage flächig an Innenflächen 4a, 4b des Vierkantrohres 4 an.

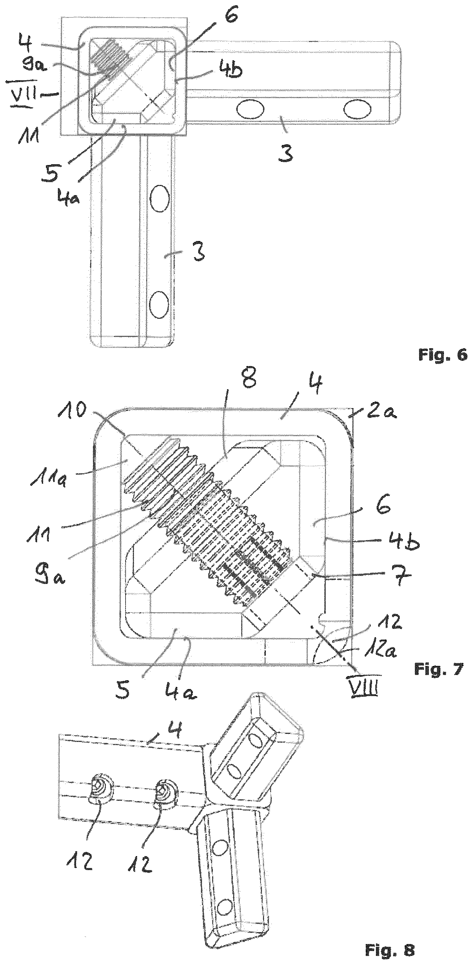

Jeder zapfenförmige Ansatz 3 weist wenigstens eine, bevorzugt zwei, voneinander beabstandete durchgehende Querbohrungen 9 mit Innengewinde auf. Dabei sind die Querbohrungen 9 bei den dargestellten Ausführungsbeispielen senkrecht zu den Außenflächen 7, 8 derart angeordnet, dass sie in Montagelage mit einer Ecke 10 des Rohrendes des zugeordneten Vierkantrohres 4 fluchten. Dies ist am besten in den Fig. 4 und 7 zu erkennen, in denen die Längsachse der Querbohrung 9 mit 9a bezeichnet ist. Diese erstreckt sich genau in die Ecke 10 des Vierkantrohres 4, d.h. die Längsachse 9a der Bohrung 9 fluchtet in Montagelage mit einer Ecke 10 des Rohrendes.

In die jeweilige Querbohrung 9 ist ein Gewindestift 11 eingeschraubt, wobei dieser so dimensioniert ist, dass er in eingeschraubter Lage nur geringfügig aus der Querbohrung 9 herausragt, so dass ein freies Aufstecken des Rohrendes eines Vierkantrohres 4 möglich ist.

Jedes Vierkantrohr 4 weist an wenigstens einem mit einem Verbindungselement 1 zu verbindenden Rohrende gegenüberliegend zur Ecke 10 eine Bohrung 12 mit einer Längsachse 12a auf, die in Montagelage mit der Querbohrung 9 fluchtet und es ermöglicht, einen Schraubenzieher, Inbusschlüssel od. dgl. einzustecken, um damit den Gewindestift 9 zu erreichen und zu betätigen. In Montagelage fallen also die Längsachse 9a der Querbohrung 9 und die Längsachse 12a der Bohrung 12 zusammen und die Ecke 10 liegt auf den Längsachsen 9a, 12a.

Zur Montage bzw. Befestigung eines Vierkantrohres 4 am Verbindungselement 1 wird das Vierkantrohr 4 mit seinem Rohrende auf einen zapfenförmigen Ansatz 3 aufgesteckt, bis es umlaufend an Anschlagflächen 2a des Zentralkörpers 2 anliegt. Diese Vormontagelage ist in den Fig. 3 bis 5 dargestellt. Anschließend wird ein Schraubendreher, Inbusschlüssel od. dgl. durch die jeweilige Bohrung 12 im Rohrende des jeweiligen Vierkantrohres 4 hindurchgeführt und der Gewindestift 11 von der in Fig. 4 dargestellten Lage in die in Fig. 7 dargestellte Lage ein- bzw. herausgeschraubt, so dass die vordere Spitze 11a des Gewindestiftes 11 innenseitig in der Ecke 10 des Vierkantrohres 4 zur Anlage kommt. Dadurch werden automatisch die beiden Außenflächen 5 und 6 des jeweiligen zapfenförmigen Ansatzes 3 gegen die Innenflächen 4a und 4b des Vierkantrohres 4 gedrückt, so dass eine flächige Klemmverbindung entsteht.

Soll die Verbindung zwischen einem Rohrende und dem Verbindungselement 1 wieder gelöst werden, wird umgekehrt vorgegangen, d.h. der Gewindestift 11 zurück in die in Fig. 4 dargestellte Lage geschraubt.

Das Verbindungselement 1 weist mindestens einen zapfenförmigen Ansatz 3 auf. Grundsätzlich kann es beliebig viele zapfenförmige Ansätze 3 in beliebigen Winkellagen aufweisen. Das Ausführungsbeispiel nach Fig. 2 zeigt ein Verbindungselement 1 mit z.B. fünf zapfenförmigen Ansätzen 3. Selbstverständlich ist das Verbindungselement 1 nicht nur für Vierkantrohre, sondern auch für andere Mehrkantrohre geeignet, wobei dann die geometrische Form der zapfenförmigen Ansätze 3 entsprechend verändert wird. Dabei ist zweckmäßigerweise gewährleistet, dass der jeweilige zapfenförmige Ansatz 3 mit wenigstens zwei Anlageflächen innenseitig am entsprechenden Mehrkantrohr anliegt.

### Bezugszeichenliste:

- 1: Verbindungselement
- 2: Zentralkörper
- 2a: Anschlagfläche
- 3: Ansatz
- 4: Vierkantrohr
- 4a, 4b: Innenfläche
- 5,6,7,8: Außenfläche
- 9: Querbohrung
- 9a: Längsachse
- 10: Ecke
- 11: Gewindestift
- 11a: Spitze
- 12: Bohrung
- 12a: Längsachse

## Patentansprüche

1. Verbindungssystem mit wenigstens einem Rohr (4) und einem Verbindungselement (1), wobei das Rohr (4) an wenigstens einem Rohrende wenigstes eine Bohrung (12) und das Verbindungselement (1) wenigstens einen zapfenförmigen Ansatz (3) zum Aufstecken eines Rohrendes des jeweiligen Rohres (4) aufweist, wobei der wenigstens eine Ansatz (3) eine wenigstens bereichsweise an die Innenkontur des jeweiligen Rohres (4) angepasste Außenkontur und wenigstens eine durchgehende Querbohrung (9) mit Innengewinde aufweist, welche in Montagelage mit der Bohrung (12) des Rohres (4) fluchtet, wobei die Querbohrung (9) einen in Montagelage bis an die Innenseite des Rohrendes herausschraubbaren Gewindestift (11) aufnimmt,
wobei
das Rohr ein Mehrkantrohr (4) ist und die Längsachse (9a) der Querbohrung (9) in Montagelage mit einer Ecke (10) des Rohrendes fluchtet und der Gewindestift in Montagelage bis in die Ecke (10) des Rohrendes herausschraubbar ist und mit seiner Spitze (11a) in der Ecke (10) anliegt, wodurch Außenflächen (5,6) des Ansatzes (3) flächig gegen Innenflächen (4a,4b) des Rohrendes angedrückt werden.

2. Verbindungssystem nach Anspruch 1,
**dadurch gekennzeichnet,**
**dass** wenigstens zwei zapfenförmige Ansätze (3) vorgesehen sind, die an einem gemeinsamen Zentralkörper (2) angeordnet sind.

3. Verbindungssystem nach Anspruch 2,
**dadurch gekennzeichnet,**
**dass** der Zentralkörper (2) Anschlagflächen (2a) für das jeweilige Rohrende aufweist.

4. Verbindungssystem nach einem oder mehreren der Ansprüche 1 bis 3, **dadurch gekennzeichnet,**
**dass** der wenigstens eine zapfenförmige Ansatz (3) zwei in Montagelage unter Druck an zwei Innenflächen (4a,4b) des jeweiligen Rohrendes anliegende Außenflächen (5,6) aufweist.

5. Verbindungssystem nach einem oder mehreren der Ansprüche 1 bis 4, **dadurch gekennzeichnet,**
**dass** der wenigstens eine zapfenförmige Ansatz (3) zwei benachbarte durchgehende Querbohrungen (9) mit Innengewinde aufweist, die in Montagelage mit einer Ecke (10) des Rohrendes fluchten und die jeweils einen in Montagelage bis in die Ecke (10) des Rohrendes herausschraubbaren Gewindestift (11) aufnehmen.

6. Verbindungssystem nach einem oder mehreren der Ansprüche 1 bis 5, **dadurch gekennzeichnet,**
**dass** das Verbindungselement (1) als Druckgussteil ausgebildet ist.

7. Verbindungssystem nach Anspruch 6,
**dadurch gekennzeichnet,**
**dass** das Verbindungselement (1) aus Zink besteht.

## Claims

1. Connection system having at least one pipe (4) and a connection element (1), wherein the pipe (4) has at least one bore (12) at at least one pipe end and the connection element (1) has at least one peg-shaped attachment (3) for mounting a pipe end of the respective pipe (4), wherein the at least one attachment (3) has an outer contour which is adapted at least in some regions to the inner contour of the respective pipe (4) and has at least one continuous transverse bore (9) with an inner threading which in the mounted position aligns with the bore (12) of the pipe (4), wherein the transverse bore (9) accommodates a threaded pin (11) which can be unscrewed in the mounted position as far as the inner side of the pipe end,
wherein the pipe is a polygonal pipe (4) and the longitudinal axis (9a) of the transverse bore (9) in the mounted position aligns with a corner (10) of the pipe end and the threaded pin can be unscrewed in the mounted position as far as the corner (10) of the pipe end and rests with its tip (11a) in the corner (10), as a result of which outer surfaces (5, 6) of the attachment (3) are pressed flatly against inner surfaces (4a, 4b) of the pipe end.

2. Connection system according to claim 1,
**characterised in that**
at least two peg-shaped attachments (3) are provided which are arranged on a common central body (2).

3. Connection system according to claim 2,
**characterised in that**
the central body (2) has stop surfaces (2a) for the respective pipe end.

4. Connection system according to one or more of claims 1 to 3,
**characterised in that**
the at least one peg-shaped attachment (3) has two outer surfaces (5, 6) which in the mounted position rest under pressure onto inner surfaces (4a, 4b) of the respective pipe end.

5. Connection system according to one or more of claims 1 to 4,
**characterised in that**
the at least one peg -shaped attachment (3) has two adjacent continuous transverse bores (9) with inner threading, which in the mounted position aligns with a corner (10) of the pipe end and which accommodates in each case one threaded pin (11) which can be unscrewed in the mounted position as far as the corner (10) of the pipe end.

6. Connection system according to one or more of claims 1 to 5,
**characterised in that**
the connection element (1) is in the form of a diecast part.

7. Connection system according to claim 6,
**characterised in that**
the connection element (1) is made of zinc.

## Revendications

1. Système de raccordement avec au moins un tube (4) et un élément de raccordement (1), dans lequel le tube (4) présente au moins un alésage (12) à au moins une extrémité de tube et l'élément de raccordement (1) présente au moins un appendice en forme de tenon (3) pour l'emboîtement d'une extrémité de tube du tube respectif (4), dans lequel l'au moins un appendice (3) présente un contour extérieur adapté au moins par zones au contour intérieur du tube respectif (4) et au moins un alésage transversal continu (9) avec un filetage intérieur, lequel, en position de montage, est aligné avec l'alésage (12) du tube (4), dans lequel l'alésage transversal (9) reçoit une tige filetée (11) dévissable en position de montage jusqu'au côté intérieur de l'extrémité de tube,
dans lequel le tube est un tube polygonal (4) et l'axe longitudinal (9a) de l'alésage transversal (9) est aligné, en position de montage, avec un coin (10) de l'extrémité de tube et la tige filetée est dévissable, en position de montage, jusque dans le coin (10) de l'extrémité de tube et repose par sa pointe (11a) contre le coin (10), moyennant quoi les surfaces extérieures (5, 6) de l'appendice (3) sont pressées à plat contre les surfaces intérieures (4a, 4b) de l'extrémité de tube.

2. Système de raccordement selon la revendication 1,
**caractérisé en ce**
**qu'**au moins deux appendices en forme de tenon (3) sont prévus, qui sont disposés sur un corps central commun (2).

3. Système de raccordement selon la revendication 2,
**caractérisé en ce**
**que** le corps central (2) présente des surfaces de butée (2a) pour l'extrémité de tube respective.

4. Système de raccordement selon une ou plusieurs des revendications 1 à 3, **caractérisé en ce**
**que** l'au moins un appendice en forme de tenon (3) présente deux surfaces extérieures (5, 6) qui, en position de montage, reposent sous pression contre deux surfaces intérieures (4a, 4b) de l'extrémité de tube respective.

5. Système de raccordement selon une ou plusieurs des revendications 1 à 4,
**caractérisé en ce**
**que** l'au moins un appendice en forme de tenon (3) présente deux alésages transversaux (9) continus voisins avec un filetage intérieur qui, en position de montage, sont alignés avec un coin (10) de l'extrémité de tube et qui reçoivent respectivement une tige filetée (11) dévissable en position de montage jusque dans le coin (10) de l'extrémité de tube.

6. Système de raccordement selon une ou plusieurs des revendications 1 à 5,
**caractérisé en ce**
**que** l'élément de raccordement (1) est conçu en tant que pièce coulée sous pression.

7. Système de raccordement selon la revendication 6,
**caractérisé en ce**
**que** l'élément de raccordement (1) est constitué de zinc.
